# EUROPEAN PATENT APPLICATION

(11) **EP 4 769 705 A1**
(43) Date of publication of application: **01.07.2026**
(21) Application number: 25866509.0
(22) Date of filing: 03.09.2025
(51) Int. Cl.: H01M 50/204, H01M 10/42, H01M 10/48, H01M 50/249

(54) **BATTERY MODULE AND BATTERY PACK INCLUDING SAME**

(30) Priority: 11.09.2024 KR 20240123683
(71) Applicant: LG ENERGY SOLUTION, LTD., Seoul 07335 (KR)
(72) Inventor: JIN, Taemin, Daejeon 34122 (KR); KIM, Donghyun, Daejeon 34122 (KR)
(74) Representative: BCKIP Part mbB
(86) International application number: PCT/KR2025/013603
(87) International publication number: WO 2026/059213

(57) **Abstract**

A battery module according to an embodiment of the present invention comprises: a battery cell stack in which a plurality of battery cells are stacked; a module case configured to accommodate the battery cell stack; and a top plate disposed on an upper side of the battery cell stack, the top plate including: a mounting hole; and a protruding wall disposed at one edge of the mounting hole and protruding upward.

Thereby, the battery module according to the present embodiment can prevent bending of the top plate and loss of the wireless communication function of the cell monitoring unit.

## Description

### [TECHNICAL FIELD]

The present invention relates to a battery module, and more particularly, to a battery module that can prevent a top plate from bending and prevent the loss of a wireless communication function of a cell monitoring unit.

### [BACKGROUND ART]

Unlike non-rechargeable primary batteries, secondary batteries refer to rechargeable batteries capable of both charging and discharging. Such secondary batteries are applied not only in portable electronic devices but also in electrically driven vehicles, such as electric vehicles (EVs) and hybrid electric vehicles (HEVs), which are propelled by electric drive sources.

Types of secondary batteries currently in widespread use include lithium-ion batteries, lithium-polymer batteries, nickel-cadmium batteries, nickel-metal hydride batteries, and nickel-zinc batteries. The operating voltage of a single secondary battery cell, i.e., a unit battery cell, is approximately 2.5 V to 4.6 V. Therefore, when a higher output voltage is required, a battery pack is formed by connecting a plurality of battery cells in series. In addition, the battery pack may be constructed by electrically connecting a plurality of battery cells in parallel according to the required charge/discharge capacity. Accordingly, the number of battery cells included in the battery pack may be variously determined depending on the required output voltage or charge/discharge capacity.

When a plurality of battery cells are connected in series and/or in parallel to form a battery pack, it is generally practiced to first assemble a battery module including at least one battery cell, preferably a plurality of battery cells, and then fabricate the battery pack using at least one such battery module together with other components. Here, the term "battery module" refers to a unit comprising a plurality of battery cells connected in series and/or in parallel, whereas the term "battery pack" refers to a unit in which a plurality of such battery modules are interconnected in series and/or in parallel to increase capacity and output.

The battery module constituting such secondary batteries generates heat during charging or discharging, and in the event of overcharging or the like, the top plate disposed on the upper portion of the case may undergo bending deformation due to swelling of the battery module, which may lead to a loss of the wireless communication function of the cell monitoring unit mounted on the top plate.

### [SUMMARY OF THE INVENTION]

### [TECHNICAL PROBLEM]

An object of the present invention is to provide a battery module capable of preventing the bending of a top plate and the loss of the wireless communication function of a cell monitoring unit.

### [SOLUTION TO THE PROBLEM]

A battery module according to an embodiment of the present invention comprises: a battery cell stack in which a plurality of battery cells are stacked; a module case configured to accommodate the battery cell stack; and a top plate disposed on an upper side of the battery cell stack, the top plate including: a mounting hole; and a protruding wall disposed at one edge of the mounting hole and protruding upward.

Further, the edge of the mounting hole at which the protruding wall is disposed extends in the longitudinal direction of the top plate.

Further, the protruding wall extends along the edge of the mounting hole.

Further, the protruding wall is formed by being bent upward from the top plate.

Further, the mounting hole includes a pair of first edges disposed to face each other, and a pair of second edges disposed to face each other.

Further, the first edges extend in the longitudinal direction of the top plate, and the second edges extend in the width direction of the top plate.

Further, the protruding wall is disposed on at least one of the pair of first edges.

Further, the second edges connect the pair of first edges.

Further, the mounting hole may be for mounting a cell monitoring unit.

Further, the cell monitoring unit includes a cell monitoring board; and a case accommodating the cell monitoring board.

Further, the case is disposed in the mounting hole and includes an upper housing and a lower housing.

Further, the protruding wall is disposed on the inner side of the upper housing.

Further, the upper housing includes one or more upper engaging protrusions, and the lower housing includes one or more lower engaging protrusions configured to engage with the upper engaging protrusions.

Further, the upper housing includes: a top plate; a sidewall extending downward from an edge of the top plate; and a flange portion bent from the sidewall and disposed on the top plate.

Further, the upper housing further includes an upper support protrusion extending downward from the lower surface of the top plate and engaged to the lower engaging protrusion.

Further, the lower engaging protrusions are respectively disposed on both sides of the lower housing, the lower engaging protrusion on one side being engaged with the upper engaging protrusion, and the lower engaging protrusion on the other side being engaged with the upper support protrusion.

Further, the protruding wall includes a bent portion at its upper part that is bent in the width direction of the top plate.

Further, the bent portion is bent outward from the upper part of the protruding wall.

### [ADVANTAGEOUS EFFECTS OF THE INVENTION]

A battery module according to an embodiment of the present invention provides the effect of preventing bending of the top plate and preventing loss of the wireless communication function of the cell monitoring unit.

### [BRIEF DESCRIPTION OF DRAWINGS]

FIG. 1 is a perspective view of a battery module according to an embodiment of the present invention.
FIG. 2 is an exploded perspective view of the battery module according to an embodiment of the present invention.
FIG. 3 is a perspective view of a battery cell in an embodiment of the present invention.
FIG. 4 is a perspective view of a terminal busbar in an embodiment of the present invention.
FIG. 5 is a perspective view of an insulating cover and an end plate in an embodiment of the present invention.
FIG. 6 is a perspective view of the top plate of the battery module in an embodiment of the present invention.
FIG. 7 is an exploded perspective view of the top plate in an embodiment of the present invention.
FIG. 8 is a cross-sectional view taken along line A-A' in FIG. 7.
FIG. 9 is a cross-sectional view taken along line B-B' in FIG. 7.
FIG. 10 is an exploded perspective view of a top plate in another embodiment of the present invention.
FIG. 11 is a cross-sectional view taken along line A-A' in FIG. 10.
FIG. 12 is a cross-sectional view taken along line B-B' in FIG. 10.
FIG. 13 is a drawing illustrating a battery pack according to an embodiment of the present invention.
FIG. 14 is a perspective view of a vehicle equipped with a battery pack according to an embodiment of the present invention.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed below, but may be implemented in various other forms. The embodiments are provided merely to ensure a complete disclosure of the present invention and to fully inform those skilled in the art of the scope of the invention. The present invention is defined only by the scope of the appended claims. Therefore, in some embodiments, well-known process steps, well-known device structures, and well-known technologies are not described in detail so as not to obscure the present invention. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it can be directly on the other element or intervening elements may be present. Conversely, when a part is referred to as being "directly on" another part, it is to be understood that there are no intervening parts. Also, when an element is referred to as being "under" another element, it may be disposed directly beneath the other element or with one or more intervening elements therebetween. Conversely, when a part is referred to as being "directly under" another part, it is to be understood that there are no intervening parts.

A battery module (1000) according to an embodiment of the present invention will now be described in detail with reference to the accompanying drawings.

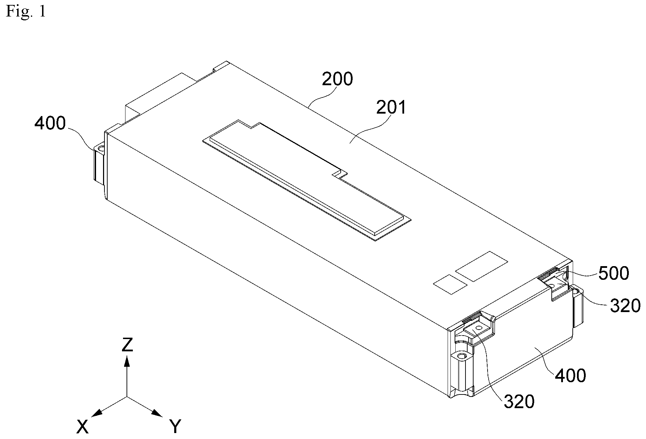

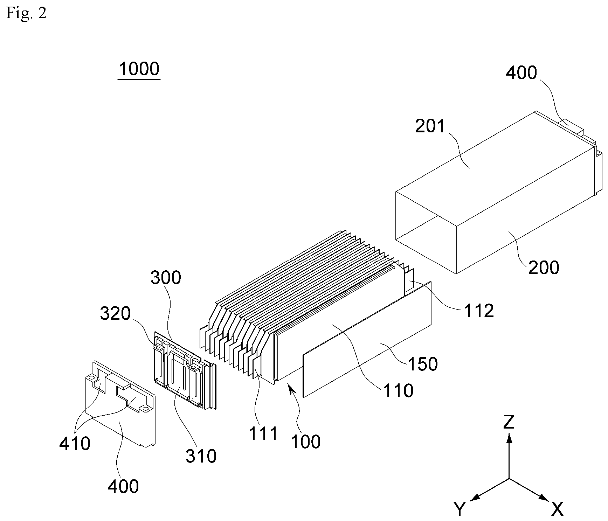

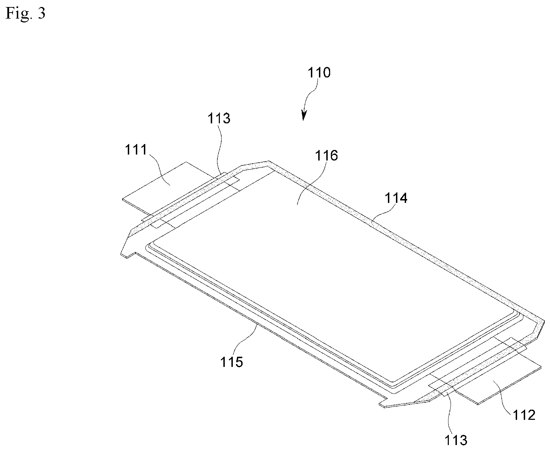

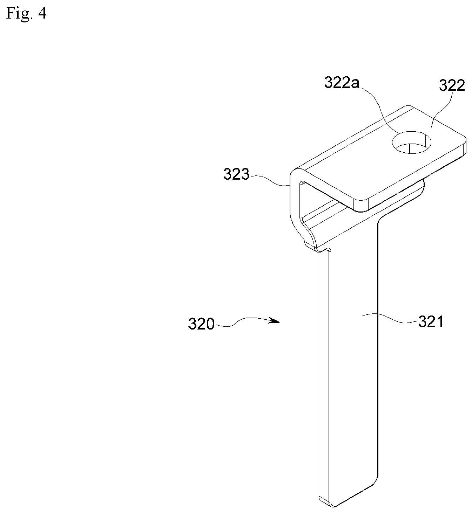

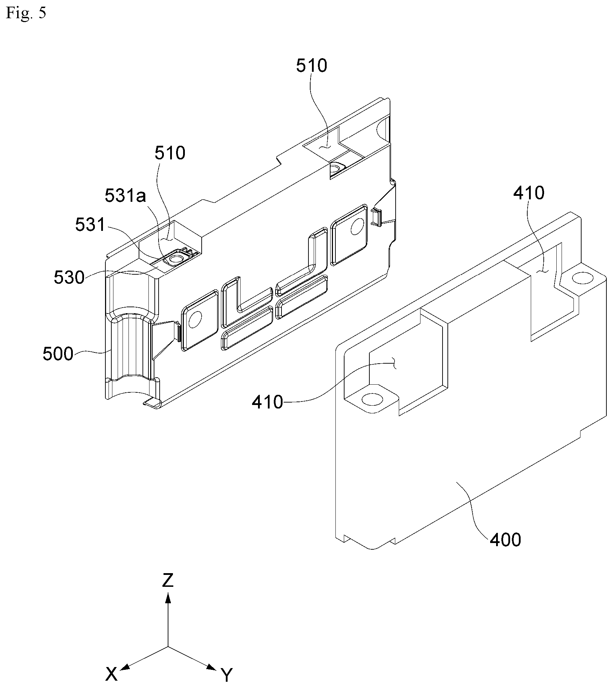

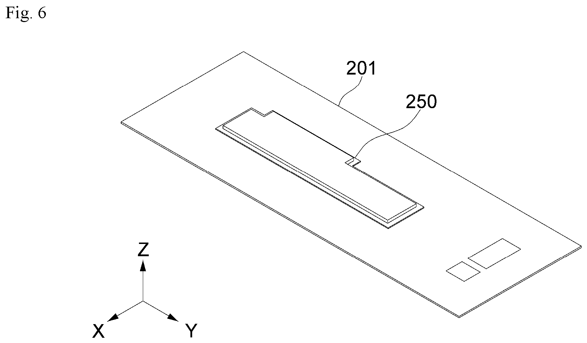

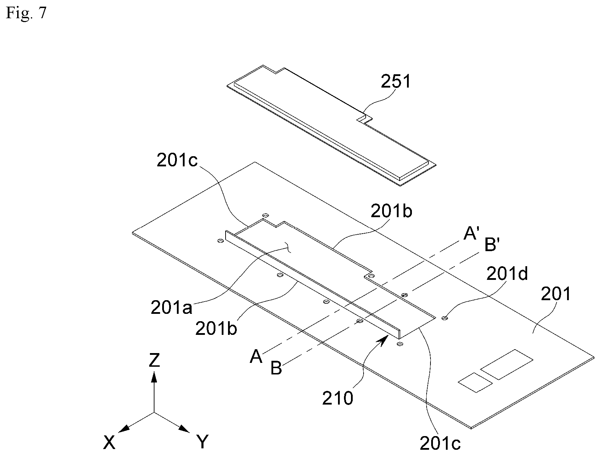

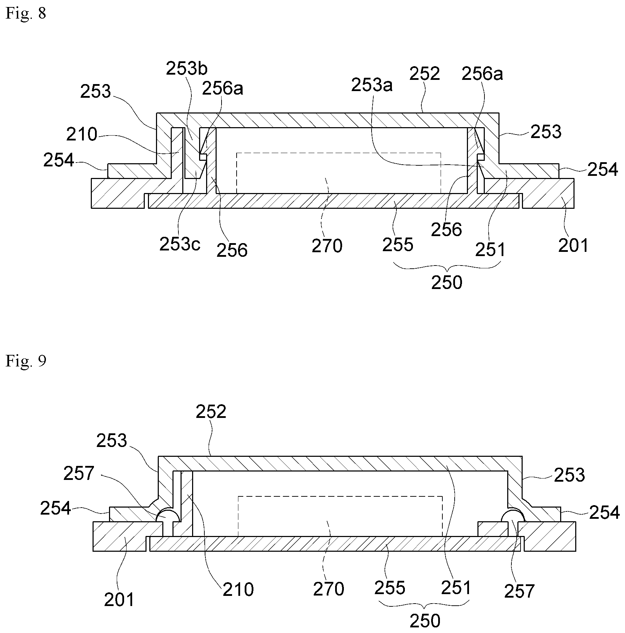

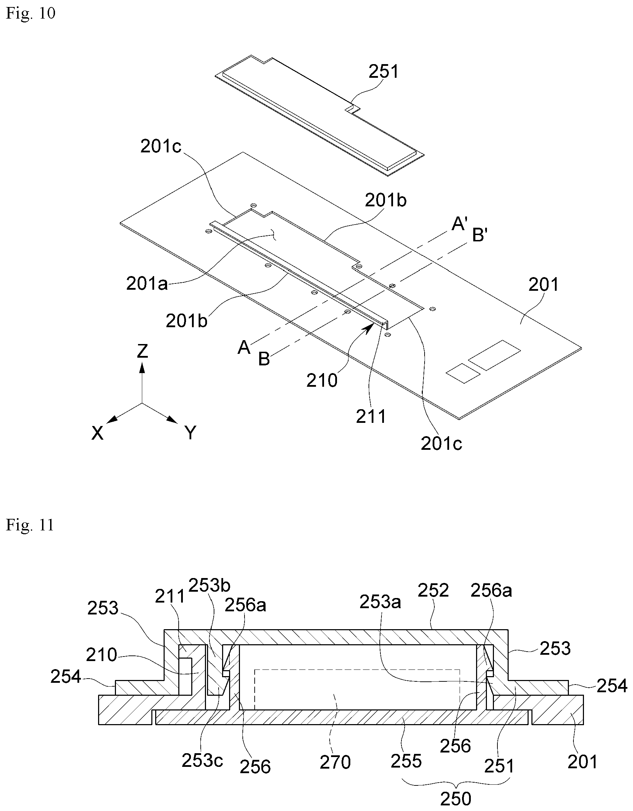

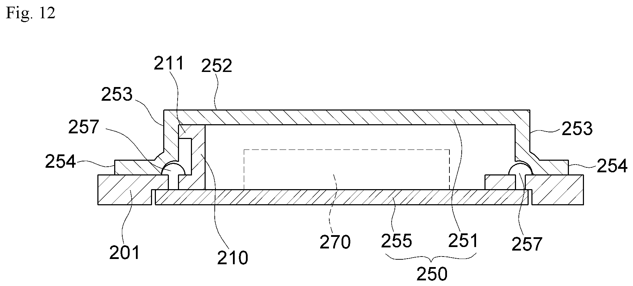

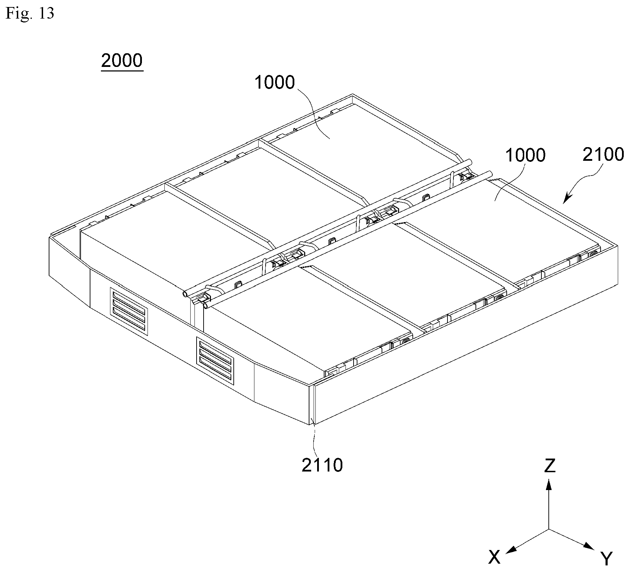

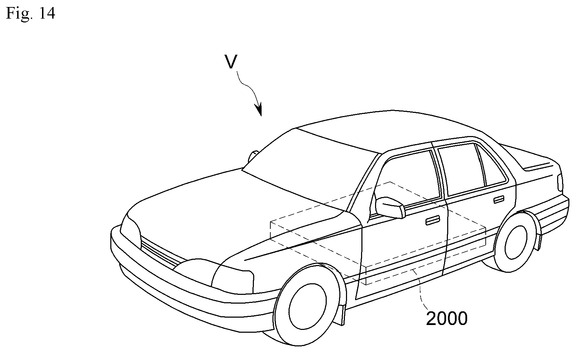

FIG. 1 is a perspective view of a battery module according to an embodiment of the present invention, FIG. 2 is an exploded perspective view of the battery module according to an embodiment of the present invention, FIG. 3 is a perspective view of a battery cell in an embodiment of the present invention, FIG. 4 is a perspective view of a terminal busbar in an embodiment of the present invention, FIG. 5 is a perspective view of an insulating cover and an end plate in an embodiment of the present invention, FIG. 6 is a perspective view of a top plate of the battery module in an embodiment of the present invention, FIG. 7 is an exploded perspective view of the top plate in an embodiment of the present invention, FIG. 8 is a cross-sectional view taken along line A-A' in FIG. 7, FIG. 9 is a cross-sectional view taken along line B-B' in FIG. 7, FIG. 10 is an exploded perspective view of a top plate in another embodiment of the present invention, FIG. 11 is a cross-sectional view taken along line A-A' in FIG. 10, FIG. 12 is a cross-sectional view taken along line B-B' in FIG. 10, FIG. 13 is a drawing illustrating a battery pack according to an embodiment of the present invention, and FIG. 14 is a perspective view of a vehicle equipped with the battery pack according to an embodiment of the present invention.

A battery module (1000) according to an embodiment of the present invention may include: a battery cell stack (100) in which a plurality of battery cells (110) are stacked; a module case (200) configured to accommodate the battery cell stack (100); a busbar frame (300) disposed on one surface and/or the other surface of the battery cell stack (100); an insulating cover (500) disposed on an outer side of the busbar frame (300); and an end plate (400) disposed on an outer side of the insulating cover (500).

The battery cell stack (100) may be formed by stacking a plurality of battery cells (110) along one direction, and the plurality of battery cells (110) may be electrically connected. The direction in which the plurality of battery cells (110) are stacked may be the X-axis direction (or the -X-axis direction) in FIG. 2.

The direction extending from the front surface to the rear surface of the battery cell stack (100), or the opposite direction, may be defined as the longitudinal direction of the battery cell stack (100), which may correspond to the Y-axis direction in the drawings. In addition, the direction extending from the upper surface to the lower surface of the battery cell stack (100), or the opposite direction, may be defined as the width direction of the battery cell stack (100), which may correspond to the Z-axis direction in the drawings.

The longitudinal direction of the battery cell stack (100) may be substantially the same as the longitudinal direction of the battery cells (110). Electrode leads (111, 112) of the battery cells (110) may be positioned on the front and rear surfaces of the battery cell stack (100), and the busbars (310, 320) of the battery module (1000) may be disposed proximate to the front and rear surfaces of the battery cell stack (100) to facilitate electrical connection with the electrode leads (111, 112).

The battery cells (110) may be provided as pouch-type battery cells, which make it possible to maximize the number of cells stacked per unit area. However, the battery cells (110) are not necessarily limited to a pouch type and may be provided in various other forms, such as prismatic or cylindrical.

A pouch-type battery cell (110) may include an electrode assembly and a cell case (115) that accommodates the electrode assembly (see FIG. 3).

The cell case (115) of the battery cell (110) is for accommodating the electrode assembly and may be a pouch-type cell case (115). The cell case (115) includes a lower case and an upper case that covers the lower case, and the upper and lower cases may be integrally formed. Further, as shown in FIG. 3, the connecting portion of the upper and lower cases may be configured in a bent and folded structure. Then, as illustrated, the upper case may completely cover the lower case, and a sealing portion (114) may be formed at the periphery.

Both the upper and lower cases may be formed of a laminate structure including an inner cladding layer, a metal layer, and an outer cladding layer. The inner cladding layer is positioned inside the cell case (115) relative to the metal layer. Since it is in direct contact with the electrode assembly, it is required to have insulating properties and resistance to the electrolyte. Furthermore, to ensure sealing from the outside, the sealing portion, where the inner layers are thermally bonded to each other, is required to exhibit excellent thermal bonding strength. The metal layer is positioned between the inner and outer cladding layers and serves as a barrier layer that prevents moisture or various gases from penetrating into the battery from the outside. A preferred material for the metal layer in contact with the inner cladding layer may be a lightweight aluminum (Al) thin film exhibiting excellent formability. The outer cladding layer is positioned on an outer side of the cell case (115) with respect to the metal layer. The outer cladding layer may be formed of a heat-resistant polymer having excellent tensile strength, moisture barrier properties, and air barrier properties so as to protect the electrode assembly while ensuring heat resistance and chemical resistance. For example, nylon or polyethylene terephthalate may be employed.

A receiving groove (116) can be formed in each of the upper and lower cases, and an electrode assembly can be accommodated within the receiving grooves (116) of the upper and lower cases.

The electrode assembly housed in the cell case (115) may be selected from the group consisting of: a jelly-roll type electrode assembly having a structure in which a separator is interposed between elongated sheet-shaped positive and negative electrodes and then wound; a stack-type electrode assembly composed of unit cells in which rectangular positive and negative electrodes are stacked with a separator interposed therebetween; a stack-folding type electrode assembly in which the unit cells are wound by an elongated separator film; and a lamination-stack type electrode assembly in which the unit cells are stacked with a separator interposed therebetween and bonded to each other.

Further, the electrode assembly may include two electrode tabs and two electrode leads (111, 112) respectively connected to these electrode tabs. The two electrode leads (111, 112) can be respectively connected to the electrode tabs by welds.

Of the two electrode leads (111, 112), one electrode lead (111, 112) may be a positive electrode lead connected to a positive electrode tab, and the other electrode lead (111, 112) may be a negative electrode lead connected to a negative electrode tab.

A lead film (113) may be attached to each of the electrode leads (111, 112). The lead film (113) coupled to the electrode leads (111, 112) is disposed between the electrode leads (111, 112) and the cell case (115) to prevent a short circuit from occurring between the electrode leads (111, 112) and the cell case (115) and to improve the sealing force, thereby preventing issues such as the leakage of the electrolyte.

The two electrode leads (111, 112) are illustrated as being arranged on opposite sides of the electrode assembly; however, they may alternatively be arranged on only one side of the electrode assembly depending on the arrangement of the electrode tabs.

The module case (200) may be for protecting the battery cell stack (100) and electrical components connected thereto from an external physical impact, and the module case (200) may accommodate the battery cell stack (100) and the electrical components connected thereto in an internal space of the module case (200).

The structure of the module case (200) may vary; for example, the module case (200) may have a mono-frame structure. Here, the mono-frame may be in the form of a metal plate with an integrated upper surface, a lower surface, and both sidewalls. The mono-frame can be manufactured by extrusion molding. As another example, the module case (200) may have a structure formed by combining a U-shaped frame and a top plate (201). In the case of a structure combining a U-shaped frame and a top plate (201), the module case (200) may be formed by coupling the top plate (201) to an upper side of the U-shaped frame, which is a metal plate having an integrated or joined bottom plate and two sidewalls. Each frame or plate may be manufactured by press forming. Further, the structure of the module case (200) may be provided as an L-shaped frame structure in addition to a mono-frame or U-shaped frame, and may also be provided in various other structures not described in the foregoing examples.

The module case (200) may be provided in a form that is open along the longitudinal direction of the battery cell stack (100). The front surface and the rear surface of the battery cell stack (100) may not be covered by the module case (200). The electrode leads (111, 112) of the battery cells (110) may not be covered by the module case (200). The front and rear surfaces of the battery cell stack (100) may be covered by a busbar frame (300), an end plate (400), busbars (310, 320), or the like, which will be described later, and thereby the front and rear surfaces of the battery cell stack (100) may be protected from external physical impact or the like.

A compression pad (150) may be disposed between the battery cell stack (100) and one of the inner surfaces of the module case (200).

The compression pad (150) may be disposed in the battery cell stack (100) to face the battery cell (110) positioned at the outermost portion of the battery cell stack (100) in an X-axis direction as shown in the drawings.

Further, a thermally conductive resin may be injected between the inner surface of the battery cell stack (100) and the module case (200), thereby forming a thermally conductive resin layer (610) between one of the inner surfaces of the battery cell stack (100) and the module case (200). At this time, the thermally conductive resin layer (610) may be positioned along the Z-axis of the battery cell stack (100) and may be formed between the battery cell stack (100) and the bottom plate positioned on the -Z-axis of the module case (200).

The busbar frame (300) is disposed on one surface of the battery cell stack (100) and may cover the one surface of the battery cell stack (100) while guiding electrical connection between the battery cell stack (100) and an external device. Specifically, the busbar frame (300), as illustrated, may be disposed on a front surface or a rear surface of the battery cell stack (100), and may alternatively be disposed on an upper surface, a lower surface, or a side surface. At least one of busbars (310, 320) and a module connector may be mounted on the busbar frame (300). As illustrated in FIG. 2, one surface of the busbar frame (300) is coupled to one surface or the opposite surface of the battery cell stack (100), and the other surface of the busbar frame (300) may be coupled to the busbars (310, 320).

The busbar frame (300) may include an electrically insulating material. The busbar frame (300) may restrict the busbars (310, 320) from contacting portions of the battery cells (110) other than the portions joined to the electrode leads (111, 112), thereby preventing occurrence of a short circuit.

The busbar frame (300) may be disposed on one side and the other side of the battery cell stack (100), respectively.

The busbars (310, 320) are mounted on one surface of the busbar frame (300) and may serve to electrically connect the battery cell stack (100) or the battery cells (110) to an external circuit of a device. A plurality of busbars (310, 320) may be provided and disposed between the battery cell stack (100) or the busbar frame (300) and the end plate (400) so as to be protected from external impact or the like, thereby minimizing deterioration in durability due to external moisture or the like.

The busbars (310, 320) may be electrically connected to the battery cell stack (100) via the electrode leads (111, 112) of the battery cells (110).

Specifically, the electrode leads (111, 112) of the battery cells (110) may be bent and connected to the busbars (310, 320) after passing through a lead slit formed in the busbar frame (300). The battery cells (110) constituting the battery cell stack (100) may be connected in series or in parallel by the busbars (310, 320).

The busbars (310, 320) may include a terminal busbar (320) configured to electrically connect one battery module (100) to another battery module (100). For connection to another battery module (100), at least a portion of the terminal busbar (320) may be exposed outside the end plate (400), and the end plate (400) may include a terminal opening (410) for this purpose.

An end portion (second portion (322)) of the terminal busbar (320) may be exposed through the opening (510) of the insulating cover (500) and the terminal opening (410) of the end plate (400).

As illustrated in FIG. 4, the terminal busbar (320) may include a first portion (321) connected to the electrode leads (111, 112) of the battery cell (110) and a second portion (322) exposed to the outside through the terminal opening (410). In addition, the terminal busbar (320) may further include a bending portion (323) formed between the first portion (321) and the second portion (322).

In the terminal busbar (320), the first portion (321) may be connected to the second portion (322) through the bending portion (323), and one surface of the first portion (321) and one surface of the second portion (322) may be perpendicular to each other. That is, by forming a bent portion (323) on the terminal busbar (320), the second portion (322) protrudes and is seated on the seating portion (530) of the insulating cover (500), and the second portion (322) may be electrically connected to an inter-busbar (not shown). A coupling hole (322a) is formed in the second portion (322) constituting one end of the terminal busbar (320), and the second portion (322) of the terminal busbar (320) is fixed by a fixing pin (not shown) inserted into the coupling hole (322a).

The end plate (400) may serve to protect the battery cell stack (100) and electrical components connected thereto from external physical impact by covering an open surface of the module case (200). For this purpose, the end plate (400) may be manufactured from a material having a predetermined strength; for example, the end plate (400) may comprise a metal such as aluminum or a plastic material.

A terminal opening (410) may be formed in the end plate (400). The terminal openings (410) may be disposed on both sides of the end plate (400), and a portion of the insulating cover (500) and an end portion (second portion (322)) of the terminal busbar (320) may be exposed through the terminal openings (410).

In addition, a connector opening may be located between the terminal openings (410) disposed on both sides of the end plate (400), and a module connector may be exposed to the outside through the connector opening.

The end plate (400) may be coupled to the module case (200) while covering the busbar frame (300) or the busbars (310, 320) disposed on one surface of the battery cell stack (100). Each corner of the end plate (400) may be joined to a corresponding corner of the module case (200) by a method such as welding, bolt fastening, or hook coupling.

The end plates (400) may be disposed on one surface and the other surface of the module case (200) respectively to cover both sides of the battery cell stack (100). In this embodiment, an example is shown in which end plates (400) are positioned on the front and rear sides of the module case (200).

In addition, an insulating cover (500) for electrical insulation may be positioned between the end plate (400) and the busbar frame (300). That is, the busbar frame (300), the insulating cover (500), and the end plate (400) may be sequentially disposed outward from the battery cell stack (100). Similar to the end plate (400), the busbar frame (300) and the insulating cover (500) may each be provided as multiple units.

The insulating cover (500) may include an electrically insulating material and may prevent the busbars (310, 320) from contacting the end plate (400).

The insulating cover (500) may include an opening (510) and a seating portion (530). The openings (510) may be disposed on each of the upper sides of the insulating cover (500), and an end portion (second portion (322)) of the terminal busbar (320) may be exposed through the openings (510).

Furthermore, a connector opening may be located between the openings (510) located on both sides of the insulating cover (500), and a module connector may be exposed to the outside through the connector opening.

The insulating cover (500) may be positioned on an inner surface of the end plate (400) and may be in close contact with the inner surface of the end plate (400), but this is not necessarily required.

As described above, an end portion (second portion (322)) of the terminal busbar (320) may be exposed through the opening (510), and the exposed end portion (second portion (322)) of the terminal busbar (320) may be seated on the seating portion (530). Accordingly, the seating portion (530) may be disposed adjacent to the opening (510) and may be disposed on an upper outer surface.

The second portion (322) of the terminal busbar (320) may be seated on an upper surface of the seating portion (530), and thus the upper surface of the seating portion (530) may form a seating surface. In addition, as illustrated in FIG. 5, the seating portion (530) may include a fixing member (531) for fixing the terminal busbar (320).

The fixing member (531) may fix the second portion (322) of the terminal busbar (320) and may include a fixing hole (531a).

A fixing pin (not shown) may be inserted into the fixing hole (531a). A fixing pin (not shown) inserted into a coupling hole (322a) formed in the second portion (322) of the terminal busbar (320) is coupled to and fixed in the fixing hole (531a), such that the second portion (322) of the terminal busbar (320) may be fixed to the insulating cover (500).

Accordingly, the second portion (322) of the terminal busbar (320) is seated on the seating portion (530) of the insulating cover (500), and the second portion (322) is seated on and comes into contact with the fixing member (531) disposed on the seating portion (530).

In addition, a terminal cover portion (not shown) that covers an end portion (second portion (322)) of the exposed terminal busbar (320) may be disposed on the insulating cover (500).

Meanwhile, the top plate (201) in the battery module (1000) according to the present embodiment will be described in greater detail with reference to FIGS. 6 to 12.

As illustrated, in this embodiment, the top plate (201) is positioned at an upper side of the module case (200) and may include a mounting hole (201a) in which a cell monitoring unit (250) is mounted, and a protruding wall (210).

The mounting hole (201a) can be formed as shown in FIGS. 7 and 10, and for example, can be formed in an approximately rectangular shape.

The mounting hole (201a) may include a pair of first edges (201b) facing each other and a pair of second edges (201c) facing each other.

The first edges (201b) may define the long sides of an approximate rectangle and may extend along the longitudinal direction (Y-axis direction) of the battery module (1000) or the top plate (201). A protruding wall (210) may be disposed on at least one of the pair of first edges (201b). The pair of first edges (201b) can be arranged parallel to each other.

The protruding wall (210) can be formed to protrude upward from the first edges (201b) and can have a predetermined height. The protruding wall (210) may be formed integrally with the top plate (201) and may be formed by being bent upward at an angle of about 90 degrees from the upper surface of the top plate (201).

The protruding wall (210) may extend along the longitudinal direction of the first edges (201b) and may extend in a straight line. Further, the protruding wall (210) may be formed over the entire length from one end to the other end of the first edges (201b). The protruding wall (210) is shown as being disposed on one first edge (201b), but may also be disposed on both of the first edges (201b).

Thus, in the present embodiment, the protruding wall (210) is disposed along the first edges (201b) of the mounting hole (201a) in the top plate (201), thereby suppressing bending of the top plate (201) in the Z-axis direction (or -Z-axis direction) due to module swelling, gas accumulation, or the like. In addition, by preventing the top plate (201) from bending in the Z-axis direction (or -Z-axis direction), it is possible to prevent loss of the wireless communication function of the cell monitoring unit (250) due to bending of the cell monitoring unit (250).

The second edges (201c) may form the short sides of an approximate rectangle and may extend along the width direction (X-axis direction) of the battery module (1000) or the top plate (201). The second edges (201c) can each connect a pair of first edges (201b). The pair of second edges (201c) can be arranged parallel to each other.

A cell monitoring unit (250) can be mounted in the mounting hole (201a).

The cell monitoring unit (250) is configured to monitor the voltage and temperature of the battery cells (110) accommodated in the battery module, and may include a cell monitoring board (CSC: Cell Supervisory Circuit board) (270) for monitoring the voltage and temperature of the battery cells (110), and a case (250) for accommodating the cell monitoring board (270).

The case (250) may include an upper housing (251) and a lower housing (255).

The upper housing (251) may include a top plate (252), a sidewall (253), and a flange portion (254).

The top plate (252) is formed in a substantially flat plate shape and may cover the cell monitoring board (270) disposed in the lower housing (255). The lower surface of the top plate (252) may be in contact with the upper end of the protruding wall (210), as illustrated in FIG. 8, and may be supported by the protruding wall (210).

The sidewall (253) may extend downward from an edge of the top plate (252) toward the top plate (201), and the sidewall (253) may be formed along the circumferential direction of the top plate (252).

Further, one or more engaging protrusions (253a) may be disposed on one side of the sidewall (253). As illustrated in FIG. 8, an engaging protrusion (253a) may be disposed on a lower inner side of the sidewall (253) formed along the first edge (201b) of the mounting hole (201a), and the engaging protrusion (253a) may be formed to protrude inward (toward the mounting hole (201a) from a lower portion of the sidewall (253). The engaging protrusion (256a) of the lower housing (255) can be engaged with or supported by this engaging protrusion (253a), thereby supporting the upper housing (251).

Then, one or more upper support protrusions (253b) may be disposed to face the sidewall (253) on which the engaging protrusions (253a) are disposed. The upper support protrusions (253b) can be engaged with the lower engaging protrusions. The upper support protrusions (253b) may extend downward from the lower surface of the top plate (252) toward the lower housing (255) and may be disposed adjacent to the protruding wall (210).

An upper engaging protrusion (253c) may be disposed on a lower inner side of the upper support protrusion (253b), and the upper engaging protrusion (253c) may be formed to protrude inward (toward the mounting hole (201a)) from a lower portion of the upper support protrusion (253b). The lower engaging protrusion (256a) of the lower housing (255) is engaged with or supported by the upper engaging protrusion (253c), so that the upper housing (251) may be supported, and the upper housing (251) may be prevented from being separated from the lower housing (255). A plurality of upper support protrusions (253b) can be disposed along the first edges (201b).

The flange portion (254) can be bent from the lower end of the sidewall (253) and extend parallel to the top plate (201), and can be disposed on the top plate (201).

In the upper housing (251), the top plate (252), sidewall (253), and flange portion (254) can be formed integrally.

The lower housing (255) can be disposed on the lower side of the upper housing (251), and a cell monitoring board (270) can be disposed on the lower housing (255). The lower housing (255) may include a lower plate formed in a substantially plate shape and may further include a lower support protrusion (256).

The lower housing (255) can be coupled to the top plate (201) by a coupling pin (257) as shown in FIG. 9. Specifically, a plurality of coupling holes (201d) may be disposed around the mounting hole (201a) in the top plate (201), and coupling pins (257) may be engaged with the coupling holes (201d). The coupling pin (257) can be coupled to the coupling hole (201d) in the form of a rivet.

As illustrated in FIG. 8, the lower support protrusions (256) may be disposed on both edge portions of the lower plate in the lower housing, and lower engaging protrusions (256a) may be disposed on an upper outer side of the lower support protrusions (256) (in the direction opposite to the mounting hole (201a)). The lower engaging protrusion (256a) may be formed to protrude outward (in the opposite direction of the mounting hole (201a)). The lower engaging protrusion (256a) of one or more lower supporting protrusions (256) disposed on one edge can be engaged with or supported by the upper engaging protrusion (253a) of the sidewall (253) in the upper housing (251), and the lower engaging protrusion (256a) of one or more lower supporting protrusions (256) disposed on the other opposing edge can be engaged with or supported by the upper engaging protrusion (253c) of the upper supporting protrusion (253b).

Meanwhile, FIGS. 10 to 12 are drawings illustrating a top plate (201) in another embodiment of the present invention.

The difference between the top plate (201) illustrated in FIGS. 10 to 12 and the previous embodiment is that a bent portion (211) is disposed at the top of the protruding wall (210).

The bent portion (211) may be bent in the width direction (X-axis direction or -X-axis direction) of the battery module (1000) or the top plate (201) from the top of the protruding wall (210) and may extend parallel to the top plate (201). In the drawings, the bent portion (211) is bent outward from the top of the protruding wall (210), but may also be bent inward (toward the mounting hole (201a)). The bent portion (211) can be formed integrally with the protruding wall (210).

In this embodiment, additional rigidity can be achieved and bending of the top plate (201) can be further suppressed by forming a bent portion (211) at the top of the protruding wall (210). Accordingly, bending of the cell monitoring unit (250) can be further suppressed.

One or more battery modules (1000) according to the present invention as described above may form a battery pack (2000). As illustrated in FIG. 13, a battery pack (2000) according to an embodiment of the present invention may accommodate at least one or more battery modules (1000) in a pack case (2100), and may further comprise various control and protection systems, such as a BMS (Battery Management System) and a cooling system.

The pack case (2100) may include a lower housing (2110) and an upper housing (not shown) coupled to an upper side of the lower housing (2110), and a plurality of battery modules (1000) may be accommodated within an internal space formed by the lower housing (2110) and the upper housing.

Meanwhile, in the embodiment of the present invention, an example in which a plurality of battery modules (1000) are accommodated inside a battery pack (2000) is shown, but a plurality of battery cells (110) may be directly disposed inside the battery pack (2000).

The battery module (1000) and the battery pack (2000) according to the present invention configured as described above may be applied to various devices. Specifically, the present invention may be applied to transportation means such as electric bicycles, electric vehicles (V), and hybrid vehicles, or to an Energy Storage System (ESS), but is not limited thereto, and may also be applied to various devices capable of using a secondary battery.

FIG. 14 is a drawing illustrating an electric vehicle (V) equipped with a battery pack (2000). In an electric vehicle (V), the wheels are driven by a motor that receives power from a battery pack (2000), so that the electric vehicle may be operated.

Although the present invention has been described with reference to the preferred embodiments, it is not limited to the above-described embodiments, and various changes and modifications may be made by one of ordinary skill in the art to which the present invention pertains without departing from the spirit of the present invention.

### [INDUSTRIAL APPLICABILITY]

The present invention can provide a battery module that can prevent bending of a top plate and loss of the wireless communication function of a cell monitoring unit.

## Claims

1. A battery module, comprising:
a battery cell stack in which a plurality of battery cells are stacked; and
a module case for accommodating the battery cell stack comprising a top plate disposed on an upper side of the battery cell stack,
wherein the top plate comprises:
a mounting hole; and a protruding wall disposed on one edge of the mounting hole and protruding upward.

2. The battery module of claim 1, wherein
the edge of the mounting hole on which the protruding wall is disposed extends along the longitudinal direction of the top plate.

3. The battery module of claim 2, wherein
the protruding wall extends along the edge of the mounting hole.

4. The battery module of claim 1, wherein
the protruding wall is formed by being bent upward from the top plate.

5. The battery module of claim 1, wherein
the mounting hole comprises:
a pair of first edges facing each other; and
a pair of second edges facing each other.

6. The battery module of claim 5,
wherein the first edges extend along the longitudinal direction of the top plate, and
the second edges extend along the width direction of the top plate.

7. The battery module of claim 6,
wherein the protruding wall is disposed on at least one of the pair of first edges.

8. The battery module of claim 7,
wherein the second edges connect the pair of first edges.

9. The battery module of claim 1, wherein
the mounting hole is for mounting a cell monitoring unit.

10. The battery module of claim 9,
wherein the cell monitoring unit comprises: a cell monitoring board; and a case for accommodating the cell monitoring board.

11. The battery module of claim 10,
wherein the case is disposed in the mounting hole and comprises an upper housing and a lower housing.

12. The battery module of claim 11,
wherein the protruding wall is disposed on an inner side of the upper housing.

13. The battery module of claim 11,
wherein the upper housing comprises one or more upper engaging protrusions, and
the lower housing comprises one or more lower engaging protrusions that are engaged with the one or more upper engaging protrusions.

14. The battery module of claim 13,
wherein the upper housing further comprises: a top plate; a sidewall extending downward from an edge of the top plate; and a flange portion bent from the sidewall and disposed on the top plate.

15. The battery module of claim 14,
wherein the upper housing further comprises an upper support protrusion extending downward from a lower surface of the top plate and engaged with the lower engaging protrusion.

16. The battery module of claim 15,
wherein the lower engaging protrusions are respectively disposed on both sides of the lower housing;
the lower engaging protrusion on one side is engaged with the upper engaging protrusion; and
the lower engaging protrusion on the other side is engaged with the upper support protrusion.

17. The battery module of claim 1, wherein
the protruding wall comprises a bent portion at an upper part thereof that is bent in the width direction of the top plate.

18. The battery module of claim 17,
wherein the bent portion is bent outward from the upper part of the protruding wall.

19. A battery pack, comprising:
at least one battery module according to claim 1; and a pack case for accommodating the at least one battery module.

20. A vehicle, comprising a battery pack according to claim 19.
